# EUROPÄISCHE PATENTANMELDUNG

(11) **EP 1 669 776 A1**
(43) Veröffentlichungstag der Anmeldung: **14.06.2006**
(21) Anmeldenummer: 04029523.0
(22) Anmeldetag: 11.12.2004
(51) Int. Cl.: G01S 17/08

(54) **Handhaltbares Vermessungsgerät und Vermessungsverfahren für ein solches Vermessungsgerät**

(71) Anmelder: Leica Geosystems AG, 9435 Heerbrugg (CH)
(72) Erfinder: Siercks, Knut, Dr.-Ing., 9015 St. Gallen (CH)
(74) Vertreter: Harmann, Bernd-Günther

(57) **Zusammenfassung**

Ein handhaltbares Vermessungsgerät (1a) mit wenigstens einem Entfernungsmesser wird durch Integration einer Lagedetektionskomponente so ausgebildet, dass die Lagedetektionskomponente für jede Entfernungsmessung die jeweilige Position (GPl,GPn) des Vermessungsgerätes (1a) und die jeweilige Ausrichtung des Entfernungsmessers erfasst.

Durch diese verknüpfte Erfassung werden alle Entfernungsmessungen zu Aufpunkten (AP1,APn) in Form einer Spur (SP) aufgenommen und miteinander korreliert, so dass komplexere Auswertungen, wie z.B. die Messung unzugänglicher Objekte oder die Bestimmung der Planarität einer Fläche möglich sind.

## Beschreibung

Die Erfindung betrifft ein handhaltbares Vermessungsgerät nach dem Oberbegriff des Anspruchs 1, ein Vermessungsverfahren für ein solches Vermessungsgerät nach dem Oberbegriff des Anspruchs 12 sowie je eine Verwendung des Vermessungsgerätes und des Vermessungsverfahrens.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für militärische Zwecke. Für diese Aufgaben werden handhaltbare Vermessungsgeräte eingesetzt, welche eine optische Entfernungsmessung zu einem ausgewählten Aufpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z.B. Phasen- oder Laufzeitmessung.

Ein für solche Anwendungen geeignetes und typisches Vermessungsgerät wird beispielsweise in der EP 0 738 899 B1 beschrieben.

Vermessungsgeräte dieses Typs messen jedoch die jeweiligen Distanzen von einem Anlegepunkt zu einem Aufpunkt, welcher den emittierten Laserstrahl reflektieren muss. Fehlt ein Anlege- oder Aufpunkt, kann die Messung nicht vorgenommen werden. Dies ist beispielsweise der Fall, wenn der Abstand von zwei Kanten eines Tisches gemessen werden soll. Ebenfalls problematisch sind Messungen zu gekrümmten Flächen, die zwar visuell eine Berandung oder einen Umriss erkennen lassen, jedoch keine für die Messungen geeigneten Punkte aufweisen. Zudem ist auch bei geeigneten Messpunkten die Zugänglichkeit für die Messung nicht immer gegeben. So können beispielsweise mit Vermessungsgeräten des Stands der Technik an einer hohen Decke entlanglaufende Rohrleitungen hinsichtlich ihrer Dicken nicht vermessen werden.

Ein weiterer Nachteil bisheriger Vorrichtungen ist die mangelnde Verknüpfung der unterschiedlichen Messungen. So können grundsätzlich mehrere Entfernungsmessungen nicht automatisch miteinander korreliert werden. Solche Korrelationen eignen sich beispielsweise, um die Parallelität zweier Strukturen, wie z.B. zweier Wände, zu prüfen. Ein grundlegendes Problem einer solchen Verknüpfung liegt dabei in den unterschiedlichen Bedingungen jeder Messung begründet, da alle Messungen zueinander räumlich zugeordnet werden müssten.

Eine Aufgabe der vorliegenden Erfindung besteht darin, ein handhaltbares Vermessungsgerät bzw. ein dafür geeignetes Vermessungsverfahren bereitzustellen, mit denen auch unzugängliche oder schwer vermessbare Strukturen vermessen werden können.

Eine weitere Aufgabe besteht darin, für handhaltbare Vermessungsgeräte bzw. Verfahren eine automatische Korrelation von mehreren aufeinander folgenden Messungen zu ermöglichen.

Eine weitere Aufgabe besteht darin, ein handhaltbares Vermessungsgerät bzw. ein dafür geeignetes Vermessungsverfahren bereitzustellen, mit denen auch Eigenschaften von flächigen bzw. räumlichen Strukturen vermessen oder überprüft werden können, bzw. Strukturen identifiziert werden können.

Diese Aufgaben werden durch die Gegenstände der Ansprüche 1, 12 oder der abhängigen Ansprüche gelöst bzw. die Lösungen weitergebildet.

Die Erfindung beruht darauf, dass Entfernungsmessungen zusammen mit den zugeordneten Parametern des Ortes und der Ausrichtung der Achse des Entfernungsmessers automatisch und verknüpft aufgenommen werden. Die aufgenommenen Datensätze aus Entfernung und zugeordneten Parametern können dann direkt weiterverarbeitet oder auch zwischengespeichert werden. Durch die automatische Aufnahme werden schnell und präzise Datenmengen aufgenommen, die nachfolgend mit komplexeren Verfahren, z.B. auch statistischen Ansätzen oder Verfahren der Mustererkennung, auswertbar sind.

Die Entfernungsmessung kann mit den typischerweise in handhaltbaren Vermessungsgeräten genutzten Laserentfernungsmessern durchgeführt werden. Grundsätzlich sind jedoch auch andere Systeme erfindungsgemäss verwendbar, sofern diese eine Identifikation und räumliche Zuordnung des vermessenen Punkts zum Vermessungsgerät erlauben, wie z.B. Triangulationsmesser.

Zu jeder Entfernungsmessung werden Ausrichtung des hierfür verwendeten Strahlgangs sowie die Position des Vermessungsgerätes aufgenommen. Die Bestimmung von Ausrichtung und Position können dabei mit verschiedenen Verfahren erfolgen. Insbesondere kann erfindungsgemäss die Veränderung von Ausrichtung und Position erfasst werden, so dass nur relative Grössen gemessen werden. Diese müssen dann, wenn eine absolute Positionsbestimmung benötigt wird, auf den Startpunkt des gesamten Messverfahrens rückbezogen werden. In vielen Anwendungen ist aber eine Absolutposition der zu erhaltenden Grösse nicht notwendig. So genügt es für den Fall der bereits dargestellten Vermessung des Abstands zweier Kanten nur die Kanten und deren Entfernung sowie Position relativ zum Vermessungsgerät zu bestimmen. Aus der Menge der Messungen, die zueinander in räumlicher Beziehung stehen, kann der Abstand der Kanten berechnet werden. Eine automatisierte Bezugnahme zu einer bekannten absoluten Position ist in diesem Fall nicht erforderlich, da durch den Nutzer die Zuordnung von Distanz zu Objekt erfolgt. Somit genügt es für viele Zwecke, wenn die Messungen hinsichtlich ihrer Position und Ausrichtung zueinander bekannt sind.

Gleichfalls kann natürlich erfindungsgemäss auch für jede oder einige Messungen die absolute Position bzw. Ausrichtung im Raum bestimmt werden, so dass die Messungen nicht nur untereinander korreliert sind, sondern auch im Raum genau festgelegt sind. Dies erlaubt eine nachfolgende Verwendung in einer weiteren, von der ersten Serie unabhängigen Messfolge bzw. die Übertragung in andere Systeme.

Steht eine hinreichend grosse Anzahl von korrelierten Messungen zur Verfügung, so können auch komplexere Auswertungsverfahren eingesetzt werden. So ist es mit bekannten Verfahren möglich, in einer Punktwolke von Einzelmessungen Objekte zu identifizieren und diese in ihrer Ausdehnung oder Orientierung zu bestimmen. Solche Verfahren werden beispielsweise in WO 97/40342 beschrieben.

Bisher wurden solche Punktwolken allerdings durch ortsfest aufgestellte Scannersysteme aufgenommen. Für diese Systeme musste ein fixer Aufstellungspunkt gewählt werden, der als Basis eines durch Motoren bewirkten Scanvorgangs diente. Komplexität, Grösse und Energieverbrauch verbieten eine solche Hardware für den handgehaltenen Betrieb genauso wie das Erfordernis der festen Aufstellung.

Die vorliegende Erfindung nutzt die Bewegung der Hand zur Erzielung eines abtastenden Messvorgangs. Hierbei kann sowohl der Tremor als ohnehin vorhandene unwillkürliche Bewegung der Hand als auch eine bewusste Bewegung zur Erzeugung eines manuellen Abtastvorgangs verwendet werden. Zusätzlich zur abtastenden Bewegung der Hand kann eine scannende Bewegung des zur Entfernungsmessung verwendeten Strahls technisch erzeugt werden. Diese kann beispielsweise fächer- oder trichterförmig erfolgen und z.B. durch piezoelektrisch bewegte Elemente im Strahlgang bewirkt werden.

Durch die Handbewegung wird eine ständige Änderung der Emissionsrichtung und der Position des Vermessungsgeräts erzeugt. Die für jede Entfernungsmessung zu bestimmenden Parameter können durch interne Systeme bestimmt werden, welche die relativen Grössen als Veränderungen von Bezugsgrössen oder als wirkende Kräfte bzw. Beschleunigungen erfassen. Dies ist beispielsweise mit Inertial- bzw. Trägheitssensoren möglich. Diese messen rotatorische und translatorische Beschleunigungen. Durch die Integrierbarkeit auf Substrate, z.B. durch bekannte Verfahren der Mikrosystemtechnik, beispielsweise durch Mikro- bzw. Nanostrukturierung, stehen mittlerweile kompakte, robuste und energiesparende Sensorsysteme zur Verfügung, die eine Verwendung in handhaltbaren Vermessungssystemen möglich machen.

Inertialsensoren bieten insbesondere die Vorteile einer hohen nutzbaren Frequenz, so dass eine gute zeitliche und damit auch räumliche Auflösung erzielt werden kann. Zudem kann das Vermessungsgerät ohne Sichtverbindung zu identifizierbaren Punkten genutzt und das Gerät in geschlossener, gekapselter Bauweise ausgeführt werden.

Alternativ oder ergänzend kann jedoch auch eine Orientierung an externen Grössen, z.B. identifizierbaren Punkten oder Strukturen erfolgen. Ist die Position dieser vom Vermessungsgerät erfassten Referenzpunkte bekannt, so kann auf die aktuelle absolute Position dieses Gerätes geschlossen werden. Um die Aktualposition als gegenwärtigen Ort des Vermessungsgerätes unter allen Bedingungen mit der benötigten Genauigkeit zu ermöglichen, sind Verfahren bekannt, die auf einer Bestimmung der eigenen Position bezüglich hinsichtlich ihrer Position bekannten Objekten als Referenzobjekten bzw. Referenzpunkten beruhen. Ein Beispiel hierfür stellt das klassische Verfahren des Rückwärtsschnittes dar. Sollen nun absolute Positionen für ein Vermessungsgerät bzw. ein dafür geeignetes Positionierungsgerät aus der Kenntnis von Referenzpunkten abgeleitet werden, so müssen die Referenzpunkte vorher festgelegt und mit hinreichender Genauigkeit vermessen werden.

Jedoch kann auch ohne Kenntnis der absoluten Position dieser Referenzpunkte stets die relative Position, d.h. die auf diese Punkte bezogene Veränderung, betrachtet werden, so dass eine relative Positionierung bzw. Ausrichtung der Messachse möglich ist, welche eine Korrelation der verschiedenen Entfernungsmessungen erlaubt.

Hierfür geeignete Systeme sind beispielsweise unter dem Namen lokale Positionierungssysteme bekannt und verwenden Mikrowellen oder optische Strahlung zur Einmessung gegenüber den Referenzpunkten. Ein solches System mit einer optischen Erfassung externer Referenzpunkte ist beispielsweise in der zum Anmeldezeitpunkt noch nicht veröffentlichten europäischen Patentanmeldung Nr. 03021134 beschrieben.

Der Vorteil der extern referenzierenden Systeme liegt insbesondere in ihrer Fähigkeit zur Bestimmung der absoluten Position.

Erfindungsgemäss kann in einem Vermessungsgerät auch ein Inertialsensor mit einem extern referenzierenden System kombiniert werden, selbst wenn diese nicht die erforderliche räumliche oder zeitliche Auflösung aufweist. So weisen Inertialsensoren, die beispielsweise Drehraten und lineare Beschleunigungen messen, häufig Driften auf, die zur Abweichung der gemessenen Aktualposition von der wahren Position führen. Ein erfindungsgemässes Vermessungsgerät bietet dann eine geeignete Korrekturfunktionalität, die Abweichungen in gewissen Zeitabständen durch externe Bestimmungen der Aktualposition wieder korrigiert. Auf der anderen Seite können zwischen den niederfrequenten Schritten des externen Positionierungssystems liegende Zeiträume durch eine Positionsbestimmung mittels Inertialsensoren gestützt werden. Auch kann durch ein weiteres Positionierungssystem der zeitweilige Verlust der Erfassung von Referenzpunkten überbrückt werden, so dass entweder die Zahl der Referenzpunkte verringert und/oder der Messungen zugängliche Bereich kurzzeitig ausgedehnt werden können. Ein solches hybrid angelegtes System kann damit auch den kurzzeitigen Verlust einer Sichtverbindung zu Referenzpunkten kompensieren, so dass der Einsatzbereich allgemein vergrössert und das Vermessungsgerät hinsichtlich seiner Nutzung robuster ausgelegt ist.

Die solchermassen über die Positions- und Ausrichtungsinformation miteinander verknüpfbaren bzw. korrelierten Messungen können erfindungsgemäss mit einer Vielzahl von Ansätzen, z.B. aus der Bildverarbeitung, Mustererkennung oder der Signalverarbeitung sowie statistischen Verfahren, ausgewertet werden.

Im folgenden werden zwei für allgemeine Anwendungen im Baubereich bzw. der Vermessung von Gebäuden typische Beispiele näher erläutert.
A. Vermessung einer durch Kanten begrenzten erhabenen Struktur, z.B. einer Tischplatte
   In einem ersten Schritt erfolgt die Messung multipler Entfernungen, wobei das Vermessungsgerät grob über den Raumwinkel, der die Tischplatte beinhaltet, bewegt wird. Die Folge der Messungen kann dabei manuell oder automatisch ausgelöst werden, wobei eine Anpassung der Frequenz bzw.
   Wiederholrate vorgegeben oder automatisch, z.B. aufgrund der Bewegungsgeschwindigkeit, bestimmt werden kann.
   Aus der Menge der Messungen werden nun in einem zweiten Schritt die Kanten bestimmt. Diese können automatisch, z.B. anhand von Sprüngen in den gemessenen Entfernungen, oder manuell identifiziert werden. Die manuelle Identifikation kann beispielsweise erfolgen, indem unmittelbar auf der Kante mehrere Messungen vorgenommen werden, welche zusätzlich als Kantenmessungen indiziert werden. Aus diesen Messungen wird dann eine räumliche Kantenposition, z.B. durch Mittelwertbildung, bestimmt.
   In einem dritten Schritt wird aus den räumlichen Kantenpositionen eine Distanz ermittelt und als Breite der Tischplatte ausgegeben.
   In diesen Schritten können jeweils verschiedene, bekannte statistische Verfahren zur Anwendung kommen, um aus einer Mehrzahl von Messungen eine Distanz mit einer vorgegebenen Genauigkeit zu erhalten.
   Gleichfalls kann bereits die Aufnahme der Messungen unter Berücksichtigung einer Vorabschätzung der mit den Ergebnissen zu erzielenden Genauigkeit gesteuert werden. So kann bei ungünstigen Bedingungen dem Nutzer signalisiert werden, dass die Zahl der Messungen noch nicht ausreicht und der Messvorgang verlängert werden muss. Alternativ oder ergänzend kann auch eine automatische Anpassung der Messfrequenz erfolgen.
   Die bei der hier exemplarisch dargestellten Vermessung einer Tischplatte identifizierte und hinsichtlich ihrer räumlichen Position bestimmte Kante kann in weiteren Schritten benutzt werden, um vollständige Objekte zu identifizieren oder zu definieren. Werden nacheinander mehrere Kante als Strukturelemente vermessen, so ist anhand der mit der Messung verknüpften Orts- und Richtungsinformation auch die Lage und Ausrichtung der Strukturelemente bekannt bzw. ableitbar, so dass zusammenhängende Objekte konstruiert oder erkannt werden können. Hierfür stehen beispielsweise die bereits zitierten Verfahren der Bildverarbeitung oder der Laserscannertechnologie zur Verfügung.
B. Vermessung einer Fläche hinsichtlich ihrer Planarität, z.B. einer Wand in einem Innenraum
   Zur Vermessung der Fläche wird der erste Schritt des oben beschriebenen Beispiels analog durchgeführt.

Aus der Gesamtheit der Messungen kann dann in einem zweiten Schritt die Flachheit der Wand direkt statistisch oder auch in Stufen abgeleitet werden. Zur direkten statistischen Bestimmung kann beispielsweise die Methode der kleinsten Fehlerquadrate verwendet werden, die durch die Wolke aus Messwerten eine Ebene legt und die Abweichung der Messwerte von dieser Ebene minimiert. Aus dieser mittleren Abweichung kann auf die Flachheit der Ebene zurück geschlossen werden. Der Begriff der Ebene wird somit als zwischen den Abstufungen verlaufend definiert.

In einem mehrstufigen Verfahren kann beispielsweise zuerst der Verlauf einer abstrakten Ebene festgelegt werden, der z.B. so erfolgt, dass alle Messwerte räumlich auf der dem Entfernungsmesser zugewandten Seite der Ebene liegen.

Nachfolgend wird die Abweichung der Messwerte gegenüber dem idealen, virtuellen Verlauf der Ebene abgeleitet und so die Flachheit der Ebene bestimmt.

In den meisten Anwendungsfällen dürfte es vorteilhaft sein, wenn vor der Auswertung eine Vorinformation über die zu analysierende Topologie vorgegeben oder automatisch bestimmt wird. Eine Vorgabe kann beispielsweise durch manuelle Auswahl aus einem Menü erfolgen, das für die obigen Beispiele die Punkte "Breite bestimmen" oder "Planarität einer Ebene" aufweist, so dass bereits eine Vorgehensweise bei der Analyse bzw. mathematischer Algorithmus festgelegt wird.

Alternativ oder ergänzend kann auch eine automatisierte Bereitstellung von Vorinformationen erfolgen. So kann das Vermessungsgerät eine Bildaufnahmekomponente zur Unterstützung einer Zuordnung von Objekten zu den Entfernungsmessungen, z.B. in Form einer Kamera, enthalten. Im Zusammenhang mit den Messungen wird ein Bild des vermessenen Raumsegments aufgenommen, aus dem dann automatisch auf die Topologie des zu vermessenden Objekts geschlossen wird. Hierfür stehen im Stand der Technik leistungsfähige Algorithmen oder Vorrichtungen zur Mustererkennung zur Verfügung. Hierbei kann auch eine Bestimmung der Objekte interaktiv aus den Bildinformationen und den Messergebnissen erfolgen. So können beispielsweise Sprünge in den gemessenen Entfernungen zur Identifikation von Kanten im aufgenommenen Bild verwendet werden.

Das erfindungsgemässe Vermessungsgerät und ein erfindungsgemässes Vermessungsverfahren werden nachfolgend anhand von in der Zeichnung schematisch dargestellten Ausführungsbeispielen rein beispielhaft näher beschrieben oder erläutert. Im einzelnen zeigen
- Fig.1a-b: die Aussenansicht zweier möglicher Ausführungsformen des erfindungsgemässen Vermessungsgerätes mit Inertialsensoren und externer Referenzierung;
- Fig.2a-b: die Darstellung des Aufbaus zweier möglicher Ausführungsformen des erfindungsgemässen Vermessungsgerätes mit Inertialsensoren und externer Referenzierung;
- Fig.3: die erläuternde Darstellung des erfindungsgemässen Vermessungsverfahrens;
- Fig.4: ein erstes Beispiel der Vermessung mit dem erfindungsgemässen Vermessungsverfahren;
- Fig.5: eine erläuternde Darstellung der Ableitung einer zu messenden Grösse für das erstes Beispiel der Vermessung;

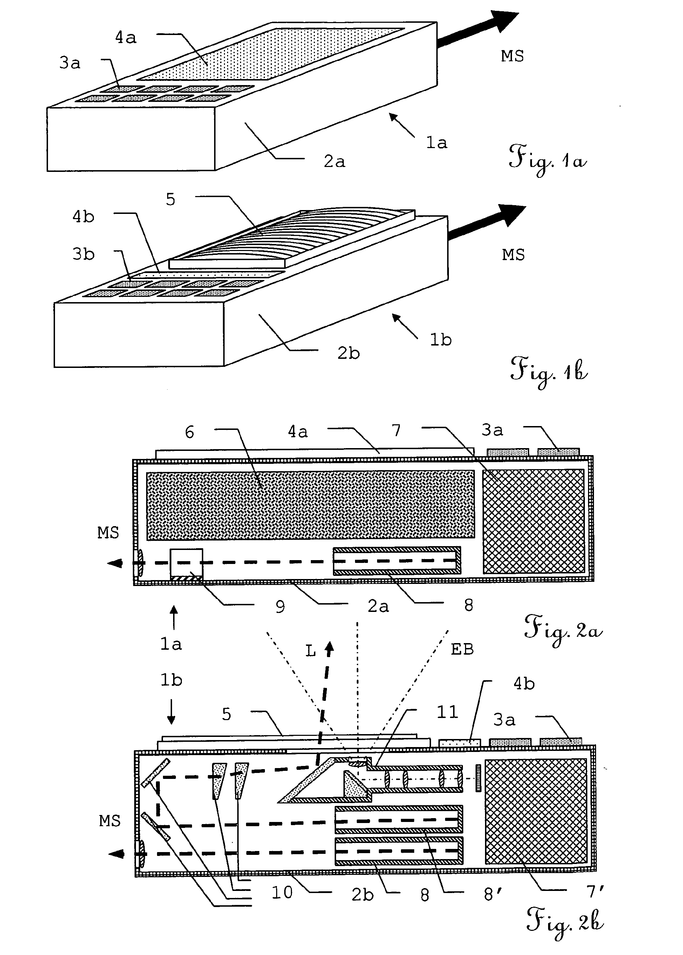

Fig.1a-b die Aussenansicht zweier möglicher Ausführungsformen des erfindungsgemässen Vermessungsgerätes mit Inertialsensoren und externer Referenzierung. Die erste Ausführungsform 1a des Vermessungsgerätes in Fig. 1a nutzt einen bzw. mehrere Inertialsensoren als Lagedetektionskomponente und weist ein Gehäuse 2a auf, das auf seiner Oberfläche als Bedienelemente Eingabe- und Steuertasten 3a und ein Anzeigefeld 4a trägt. Durch diese Bedienelemente kann die Funktionalität des Vermessungsgerätes gesteuert werden, insbesondere kann eine Auswahl von Standardobjekten erfolgen. Zur Entfernungsmessung weist das Vermessungsgerät eine Strahlungsquelle auf, welche Messstrahlung MS aussendet.

Fig.1b zeigt eine zweite Ausführungsform 1b des erfindungsgemässen Vermessungsgerätes mit einer Positionsbestimmung durch Referenzierung gegenüber externen, identifizierbaren Punkten. Hierfür wird über eine auf dem Gehäuse 2b des Vermessungsgerätes angebrachten strahlungsdurchlässigen Haube 5 Strahlung zur Identifikation und Vermessung von identifizierbaren Referenzpunkten emittiert. Als Lagedetektionskomponente wird somit ein optisches System genutzt, welches sich gegenüber externen Punkten referenziert. Auf der Oberfläche des Gehäuses sind als Bedienelemente Eingabe- und Steuertasten 3b und ein Anzeigefeld 4b angeordnet. Zur Entfernungsmessung wird Messstrahlung MS emittiert.

Statt der Entfernungsmessung mit einer Strahlungsemission kann für alle Ausführungsformen jedoch auch ein geeigneter anderer Entfernungsmesser, z.B. ein Triangulationsmesser, erfindungsgemäss zum Einsatz kommen.

Fig.2a-b zeigen schematisch den inneren Aufbau der zwei möglicher Ausführungsformen des erfindungsgemässen Vermessungsgerätes aus Fig.1a-b mit Inertialsensoren und externer Referenzierung.

Die erste Ausführungsform 1a wird in Fig.2a in ihrem Aufbau erläutert. Das Gehäuse 2a trägt auf der Oberseite Eingabe- und Steuertasten 3a und ein Anzeigefeld 4a. Innerhalb des Gehäuses 2a befinden sich ein Inertialsensor 6 als Lagedetektionskomponente und eine Recheneinheit 7 zur Entfernungsmessung und zur Ableitung einer zu messenden Grösse, insbesondere einer Distanz, aus den gemessenen Entfernungen. Zur Entfernungsmessung wird in dieser ersten Ausführungsform 1a durch eine Strahlungsquelle 8 Messstrahlung MS erzeugt und von dem Vermessungsgerät ausgesandt. Die Aussendung der Messstrahlung kann durch ein optisches Element 9 im Strahlgang in ihrer Emissionsrichtung beeinflusst werden. Beispielsweise kann ein Spiegel durch ein Piezoelement so verstellt werden, dass die über den Spiegel geführte Messstrahlung in einem Winkelbereich fächerartig scannend ausgesandt und gegebenenfalls auch empfangen wird. Diese Strahlung wird nach der Reflektion an einem Ziel von einem, hier nicht dargestellten, Empfänger wieder empfangen und das erhaltene Signal in der Recheneinheit 7 ausgewertet. Durch die Recheneinheit 7 wird jede Entfernungsmessung mit der von dem Inertialsensor 6 bereitgestellten Position des Vermessungsgerätes und der Ausrichtung des Entfernungsmessers verknüpft.

Die Zuordnung der durch die scannende Bewegung festgelegten Emissionsrichtung kann unmittelbar oder mittelbar gemessen und damit als Ausrichtung des Entfernungsmessers erfasst werden. Eine unmittelbare Messung stellt beispielsweise die schaltungstechnische Registrierung der exakten Stellung des optischen Elements 9 bei der jeweiligen Emission dar, wohingegen eine mittelbare Erfassung durch die Erfassung des Zeitpunkts der Emission möglich ist. Aus diesem Zeitpunkt und der Kenntnis der Periodendauer für einen vollständigen Scanzyklus kann rechnerisch auf die Stellung des optischen Elements 9 im Emissionszeitpunkt geschlossen werden.

Die Variation der Richtung der Entfernungsmessung ist nicht auf die Emission von Strahlung eingeschränkt. Anstelle einer Emissionsrichtung kann erfindungsgemäss beispielsweise auch die Empfangsrichtung eines Sensors variiert werden, z.B. eines Triangulationsmessers, so dass auch rein passive Systeme zur Entfernungsmessung genutzt werden können.

Fig.2b zeigt die zweite Ausführungsform 1b des erfindungsgemässen Vermessungsgerätes mit einem Gehäuse 2b, den Eingabe- und Steuertasten 3b, einem Anzeigefeld 4b und den in dem Gehäuse befindlichen Komponenten. Von einer Strahlungsquelle 8 wird in zur ersten Ausführungsform analogen Weise Messstrahlung MS erzeugt, von dem Vermessungsgerät ausgesandt, wieder empfangen und schliesslich ausgewertet. Auch bei der zweiten Ausführungsform 1b kann ein optisches Element im Strahlgang vorgesehen sein.

Zur Bestimmung der Position des Vermessungsgerätes und der Ausrichtung des Entfernungsmessers wird in der zweiten Ausführungsform 1b rein exemplarisch eine externe Referenzierung verwendet. Von einer Positionierungsstrahlungsquelle 8' wird Laserstrahlung L emittiert, die über Umlenkelemente und ein rotierbares Prismenpaar als optische Führungselemente 10 eine Steuerkomponente geführt und durch die strahlungsdurchlässige Haube 5 emittiert wird. Durch das rotierbare Prismenpaar wird der Winkel, unter dem die Laserstrahlung L auf einen Spiegel trifft, periodisch variiert, so dass eine rosettenförmige Abtastbewegung durch die Haube 5 emittierten Laserstrahls L resultiert. Die von einem Ziel, insbesondere einem Referenzpunkt zurückreflektierte Laserstrahlung wird über den gleichen Strahlgang zur Positionierungsstrahlungsquelle 8' zurückgeführt, in die hier eine Empfänger zur Entfernungsmessung baulich integriert ist.

Die von einem innerhalb des Erfassungsbereichs EB liegenden Referenzpunkt zurückreflektierte Strahlung wird ausserdem über ein als Endoskop 11 ausgebildetes optisches System auf eine Kamera als bildaufnehmender Komponente geführt. Durch diese Kamera wird parallel zur Entfernungsmessung eine Erfassung der Referenzpunkte und deren Identifikation mit Verfahren der Bildverarbeitung ermöglicht. Insbesondere kann hier eine Winkelmessung durch eine Abzählung der zwischen zwei Referenzpunkten liegenden Bildpunkte durchgeführt werden.

Zur Steuerung und Datenverarbeitung verfügt die zweite Ausführungsform 1b über eine Recheneinheit 7'. Neben den Funktionen zur Entfernungsmessung vermittels der Messstrahlung verfügt die Recheneinheit 7' über die Funktionalität zum automatischen Detektieren detektierbar gestalteter Referenzpunkte, zum Ableiten von Lageinformationen der Referenzpunkte und einer Positionskomponente zur Ableitung der Position des Vermessungsgeräts und der Ausrichtung des Entfernungsmessers aus den Lageinformationen der Referenzpunkte. Die Recheneinheit 7' verknüpft jede Entfernungsmessung mit der jeweils zum Zeitpunkt der Entfernungsmessung aktuellen Position des Vermessungsgerätes und der Ausrichtung des Entfernungsmessers.

Erfindungsgemäss kann das Vermessungsgerät auch sowohl über Inertialsensoren als auch über Komponenten zur externen Referenzierung verfügen und somit die Eigenschaften der ersten und zweiten Ausführungsform kombinieren.

Aufgrund der Abmessungen von handhaltbaren Vermessungsgeräten, wie auch deren Bauteile, und der geringen Querschnitte der zu vermessenden Punkte ist die hochgenaue und stabile Positionierung ein kritisches Erfordernis. Vorteilhafterweise können daher alle Komponenten der Strahlungsquelle, Strahlführung, Inertialsensoren und der steuernden und auswertenden Komponenten auf einer gemeinsamen Grundplatte angebracht oder auf einem gemeinsamen Substrat realisiert werden. Ein hinsichtlich Montageanforderungen und der notwendigen Positioniergenauigkeit besonders geeignetes optisches Bauelement bzw. Bauteil als Komponenten sowie ein Gesamtsystem werden in der DE 195 33 426 A1 und EP 1 127 287 B1 beschrieben. In der WO 99/26754 sowie in der europäischen Patentanmeldung EP 1 424 156 werden geeignete Verfahren zur Lötbefestigung miniaturisierter Bauteile auf einer Grundplatte dargestellt. Ein geeignetes Verfahren zum Fixieren eines miniaturisierten Bauteils auf einer Trägerplatte, insbesondere zur Feinadjustierung von optischen Komponenten, ist beispielsweise in europäischen Patentanmeldung EP 1 424 884 beschrieben.

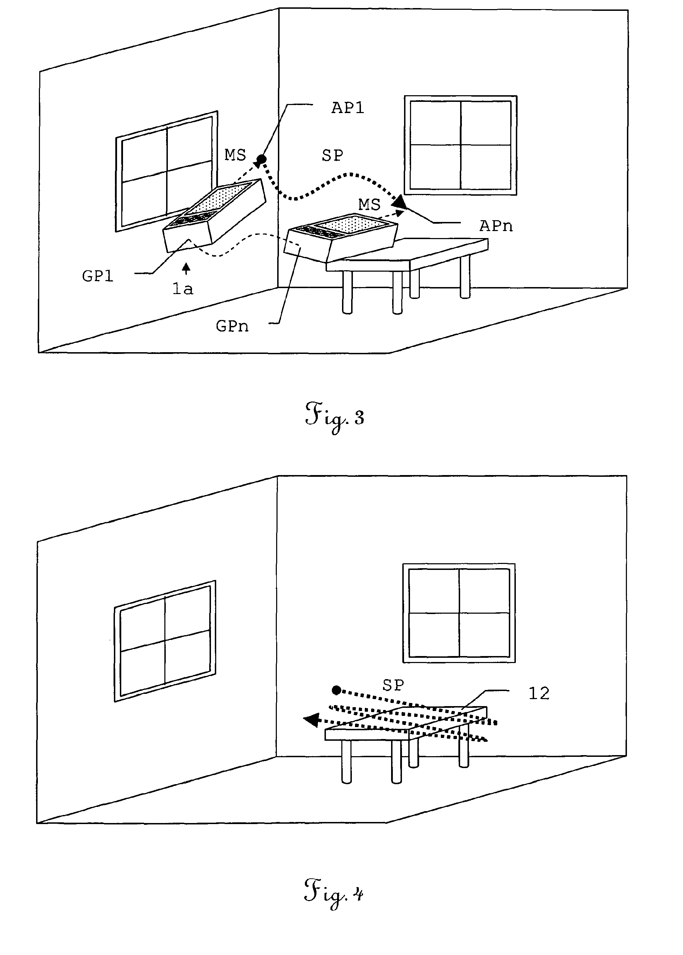

Fig.3 erläutert das erfindungsgemässe Vermessungsverfahren am Beispiel der Verwendung der ersten Ausführungsform 1a. An einer ersten Geräteposition GP1 erfolgt durch die Aussendung von Messstrahlung zu einem Aufpunkt AP1 eine Entfernungsmessung. Vom Vermessungsgerät wird an dieser Position die gemessene Entfernung zusammen mit der Position und der Ausrichtung des Entfernungsmessers verknüpft aufgenommen und gegebenenfalls gespeichert. Durch die willkürliche und/oder unwillkürliche Bewegung der menschlichen Hand wird das Vermessungsgerät im Raum bis hin zu einer Geräteposition GPn bewegt. Die der emittierten Messstrahlung zugeordnete Folge von Entfernungsmessungen bildet eine Spur SP von Aufpunkten APn. Für jede Entfernungsmessung und dem ihm zugeordneten Aufpunkt APn werden Entfernung, Geräteposition GPn des Vermessungsgerätes und Ausrichtung des Entfernungsmessers aufgenommen, so dass alle Entfernungsmessungen verknüpft sind und zueinander in eine räumliche Beziehung gebracht werden können. Die Gerätepositionen GPn und Ausrichtungen des Entfernungsmessers können absolut im Raum bestimmt werden oder aber als relative Position bzw. Veränderung gegenüber der anfänglichen Geräteposition GP1 oder der jeweiligen Vorposition bzw. deren jeweiligen Ausrichtung des Entfernungsmessers. Im diesem beispielhaften Fall wird die aktuelle Geräteposition GPn als Veränderung gegenüber der anfänglichen Geräteposition GP1 durch den Inertialsensor der ersten Ausführungsform 1a des Vermessungsgerätes erfasst, wobei gleiches für die Ausrichtung des Entfernungsmessers gilt.

In Fig.4 wird ein erstes Beispiel der Vermessung mit dem erfindungsgemässen Vermessungsverfahren dargestellt. In einem Raum befindet sich ein zu vermessender Tisch 12. Die Kanten der Tischplatte eignen sich für herkömmliche handhaltbare Vermessungsgeräte weder als Annlage noch als Ziel, welches die Messstrahlung zurückreflektiert. Eine Vermessung der Tischbreite könnte nur unter Nutzung von Hilfsmitteln, wie z.B. einem Lineal als Anlagefläche, erfolgen. Zur Vermessung der Tischbreite wird mit dem erfindungsgemässen Verfahren das erfindungsgemässe Vermessungsgerät manuell so bewegt, dass seine Spur SP von Aufpunkten der Entfernungsmessung die Tischbreite möglichst mehrfach überstreicht.

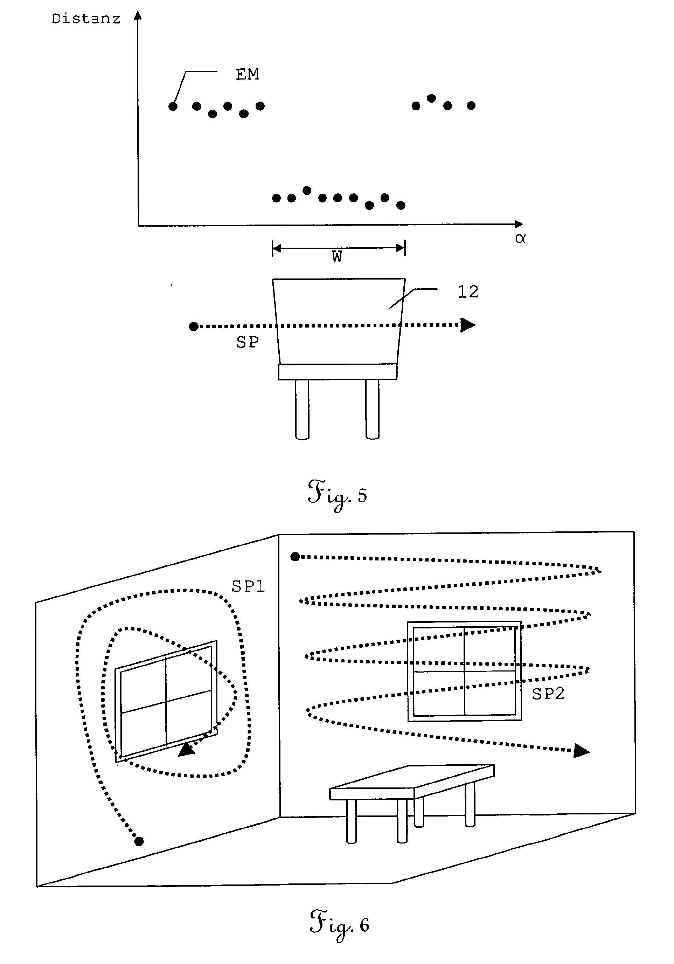

Die Auswertung der so gewonnenen Datensätze aus Entfernung, Position und Ausrichtung wird in Fig.5 erläuternd als Ableitung einer zu messenden Grösse für ein erstes Beispiel der Vermessung dargestellt. Aus Vereinfachungsgründen wird eine Spur SP betrachtet, die nur einmal über die Breite des Tisches 12 geführt wird, wobei die Analyse auch für beliebig viele Passagen verwendet werden kann. Der Spur SP sind die im oberen Teil der Fig.5 abgebildeten Entfernungsmessungen EM zugeordnet. Jedem Punkt der Darstellung entspricht eine Entfernungsmessung, die einem Winkel α zugeordnet ist, unter dem die Entfernungsmessung räumlich erfolgte. Hierbei wird aus Vereinfachungsgründen eine Messung entlang einer Geraden parallel zu Tischoberfläche betrachtet, so dass die Entfernungsmessungen EM anhand des Winkels α parametrisiert werden können. Die Folge der Entfernungsmessungen weist nun Sprünge in den bestimmten Distanzen auf, die mit den Tischkanten korreliert sind. Treffen die Messungen auf die Tischplatte auf, so ist die gemessene Distanz geringer als bei einer Messung aus dem tiefer liegenden Boden des Raumes. Aus den Sprüngen der Distanzen in der Folge von Entfernungsmessungen EM kann nun ein Winkelbereich abgeleitet werden, dem aufgrund der bekannten Distanzen ein räumlicher Abstand und damit eine Weite W bzw. Breite der Tischplatte als abzuleitender Grösse zugeordnet werden kann. Zur Identifikation solcher Sprünge oder Flanken in einer Folge von Messwerten stehen bekannte und leistungsfähige Verfahren zur Verfügung.

Aus der Darstellung wird klar, dass eine Beziehung zwischen den Einzelmessungen und der Genauigkeit der abzuleitenden Grösse besteht. Der Abstand der Entfernungsmessungen in ihrer Abfolge determiniert die mögliche Genauigkeit der Messung. Somit kann erfindungsgemäss eine Optimierung der Folge von Einzelmessungen, z.B. hinsichtlich ihres zeitlichen bzw. räumlichen Abstandes, erfolgen, welche manuell oder in Form eines vorgeschalteten Algorithmus auch automatisch erfolgen kann. Beispielsweise kann zur Erzielung einer hinreichend räumlich dichten Verteilung die aktuelle Frequenz der Messungen an die Geschwindigkeit der Bewegung der menschlichen Hand angepasst werden. Der Inertialsensor bzw. das extern referenzierende System liefern hierfür die erforderlichen Bewegungsinformationen.

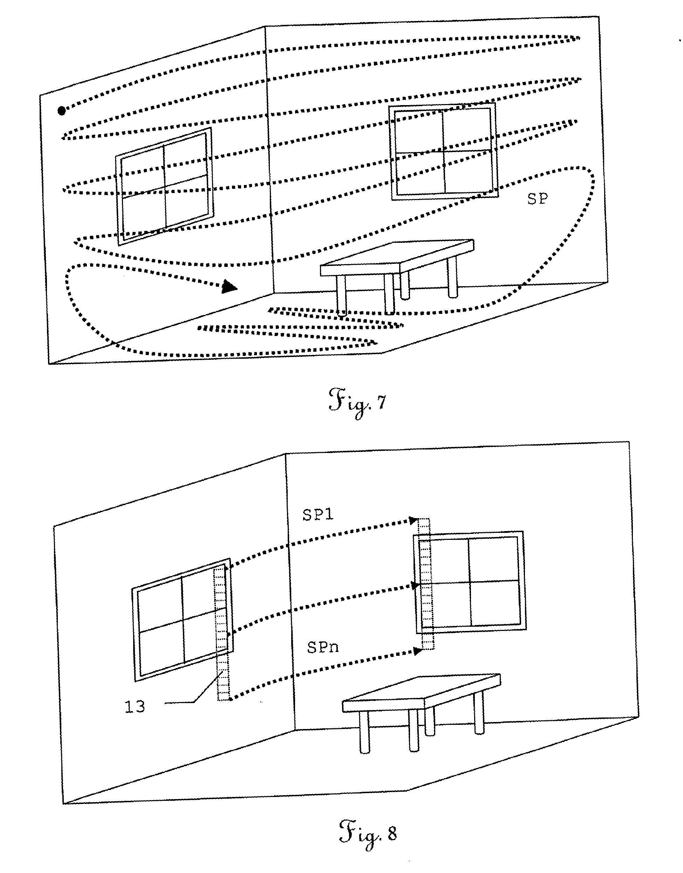

Fig.6 zeigt ein zweites Beispiel der Vermessung mit dem erfindungsgemässen Vermessungsverfahren. Im Gegensatz zum ersten Beispiel aus Fig.4 und Fig.5 wird hier ein Objekt bezüglich der Mehrdimensionalität vermessen. In diesem zweiten Beispiel sollen zur Bauabnahme in einem Raum zwei Wände hinsichtlich ihrer Planarität bzw. Ebenheit überprüft werden. Zu diesem Zweck wird jede Wand mit einer Spur SP1 bzw. SP2 aus Entfernungsmessungen abgetastet. Die Analyse der Folge von Messwerten in jeder Spur kann nun so erfolgen, dass nicht mögliche, zu identifizierende Strukturen vermessen werden, sondern statistisch die Gesamtheit aller Messwerte berücksichtigt wird. Aus der Folge der Messwerte wird eine Bezugsebene abgeleitet bezüglich derer eine Abweichung ermittelt wird. Ein möglicher Ansatz stellt die Methode der kleinsten Fehlerquadrate dar. Alternativ oder ergänzend kann aber beispielsweise auch die Fläche in ihrer Orientierung als bekannt vorgegeben werden. In diesem Beispiel werden beide Wände separat betrachtet und die zugeordneten Spuren isoliert ausgewertet.

Fig.7 erläutert ein drittes Beispiel der Vermessung mit dem erfindungsgemässen Vermessungsverfahren bei dem die Winkel zwischen zwei Wänden und dem Boden eines Raums ermittelt oder überprüft werden sollen. Zu diesem Zweck wird eine Spur SP über alle zu analysierenden Flächen geführt. Die Folge von Entfernungsmessungen erfasst nun alle Flächen.

Zur Bestimmung der Winkel können nun die Flächen identifiziert werden, d.h. jedem Messwert wird eine Fläche zugeordnet. Hierfür können Informationen bezüglich der Zahl und/oder Orientierung der Flächen vorgegeben werden oder aber in einem ersten Schritt Flächen aus den Messwerten abgeleitet werden, z.B. durch anhand von Auswahlregeln eine sukzessive Zuordnung von Messpunkten zu Mengen, die jeweils eine der Flächen repräsentieren.

Alternativ können auch statistische Verfahren eine gleichzeitige Nutzung aller Messpunkte zur Ableitung der Winkel ermöglichen.

Auch kann der Aufnahme der Spur SP eine Vorabmessung zur Identifikation der Flächen vorgeschaltet werden, in der beispielsweise jeweils eine gerade Bewegung über die Begrenzungsfläche von zwei Ebenen geführt wird. Aus der Information, dass die jeweilige Spur zwei Flächen darstellen muss, kann eine vergleichsweise schnelle Aufteilung durch Teilung der Spur in zwei Mengen erfolgen. Da nur eine Bewegung erfolgte, sind alle Messpunkte bereits sortiert, so dass nur der korrekte Trennungs- d.h.

Aufteilungspunkt der Mengen bestimmt werden muss. Für die Teilmengen kann dann beispielsweise wieder das Verfahren der kleinsten Fehlerquadrate verwendet werden, aus dem die beiden Flächen folgen.

Da durch die Lagedetektionskomponente auch mehrere Spuren räumlich verknüpft werden können, kann aber auch eine vollständig getrennte Ermittlung von Flächen, wie in Fig. 6 gezeigt, und deren nachfolgende Bezugsetzung zur Ermittlung der Winkel erfolgen.

Die parallele Erzeugung mehrerer Spuren zeigt Fig.8 für ein viertes Beispiel der Vermessung mit dem erfindungsgemässen Vermessungsverfahren und einem erfindungsgemässen Vermessungsgerät mit fächerartiger Scanwirkung. Das in diesem Beispiel verwendete Vermessungsgerät entspricht der in Fig.2a dargestellten ersten Ausführungsform mit dem optischen Element im Strahlgang zur fächerartigen Variation der Emissionsrichtung. Durch das optische Element wird jeder Ausrichtung der Achse der Strahlungsquelle nicht mehr nur ein Punkt und somit eine Achse des Entfernungsmessers zugeordnet. Nun wird eine periodische Variation der Emissionsrichtung erzeugt, so dass nicht mehr nur ein einzelner Aufpunkt sondern eine Streifen 13 von Aufpunkten vermessen wird. Dieser Streifen wird nun wie in den bereits erläuterten Verfahrensbeispielen durch das zu erfassende bzw. vermessende Raumsegment geführt. Somit wird durch eine einzige manuelle Bewegung von links nach rechts nicht mehr nur eine einzige Spur SP1 als Folge von Aufpunkten sondern eine Vielzahl von Spuren SPn erzeugt, so dass ein zweidimensionales Feld von Aufpunkten generiert wird. Neben der Einsparung von Zeit bzw. manuellem Aufwand erlaubt dieses Feld insbesondere eine gleichmässigere Abtastung, da innerhalb des Streifens eine homogene Verteilung der Punkte erfolgt. Wird die Scangeschwindigkeit im Streifen 13 so angesetzt, dass der Zeitraum für das Abtasten des Streifens klein ist gegenüber der Zeitskala der manuellen Bewegung, so kann ein vergleichsweise dicht und homogen abgetastetes Segment erfasst werden.

## Patentansprüche

1. Handhaltbares Vermessungsgerät (1a,1b),
mit wenigstens einem Entfernungsmesser, vorzugsweise einem Laserentfernungsmesser (8) mit einer Emissionsrichtung, und einer Auswertekomponente (7,7') zur Ableitung und Bereitstellung von gemessenen Entfernungen,
**gekennzeichnet durch**
eine Lagedetektionskomponente, wobei die Lagedetektionskomponente für jede Entfernungsmessung zur verknüpften Erfassung, insbesondere gemeinsamen Speicherung,
- der jeweiligen Position des Vermessungsgerätes (1a,1b) und
- der jeweiligen Ausrichtung des Entfernungsmessers, insbesondere dessen Emissionsrichtung,
ausgebildet ist.

2. Vermessungsgerät (1a,1b) nach Anspruch 1,
**dadurch gekennzeichnet, dass**
die Lagedetektionskomponente zur Erfassung einer Veränderung der Position und/oder der Emissionsrichtung ausgebildet ist.

3. Vermessungsgerät (1a,1b) nach Anspruch 2,
**dadurch gekennzeichnet, dass**
die Lagedetektionskomponente als Inertialsensor zur Detektion von linearen und/oder rotatorischen Beschleunigungen ausgebildet ist.

4. Vermessungsgerät (1b) nach einem der vorangehenden Ansprüche,
**dadurch gekennzeichnet, dass**
die Lagedetektionskomponente zur Erfassung der absoluten Position und/oder der absoluten Emissionsrichtung ausgebildet ist.

5. Vermessungsgerät (1a,1b) nach einem der vorangehenden Ansprüche,
**dadurch gekennzeichnet, dass**
die Detektionskomponente zur Erfassung von durch die unwillkürliche Bewegung der Hand bewirkten Veränderungen der Position und/oder der Emissionsrichtung ausgebildet ist.

6. Vermessungsgerät (1b) nach einem der vorangehenden Ansprüche,
**dadurch gekennzeichnet, dass**
die Lagedetektionskomponente so ausgebildet ist, dass die Position und/oder Emissionsrichtung durch Bezugnahme zu, insbesondere hinsichtlich ihrer Position bekannten, Referenzpunkten ableitbar ist.

7. Vermessungsgerät (1a,1b) nach einem der vorangehenden Ansprüche,
**dadurch gekennzeichnet, dass**
die Lagedetektionskomponente über wenigstens zwei Detektionsstufen unterschiedlicher zeitlicher und/oder räumlicher Auflösung verfügt.

8. Vermessungsgerät (1a,1b) nach einem der vorangehenden Ansprüche,
**dadurch gekennzeichnet, dass**
die Emissionsrichtung gegenüber dem Vermessungsgerät, insbesondere vermittels eines scannenden Elementes (9), variierbar ist, wobei die aktuelle Emissionsrichtung gegenüber dem Vermessungsgerät (1a,1b) in die Erfassung der absoluten und/oder relativen Emissionsrichtung einbeziehbar ist.

9. Vermessungsgerät (1a,1b) nach einem der vorangehenden Ansprüche,
**dadurch gekennzeichnet, dass**
der Entfernungsmesser so ausgebildet ist, dass eine Emission mit einer automatischen Abtastbewegung erfolgt, insbesondere fächerförmig.

10. Vermessungsgerät (1a,1b) nach einem der vorangehenden Ansprüche,
**gekennzeichnet durch**
eine Bildaufnahmekomponente zur Unterstützung einer Erkennung und/oder Zuordnung von Objekten zu den Entfernungsmessungen.

11. Vermessungsgerät (1a,1b) nach einem der vorangehenden Ansprüche,
**dadurch gekennzeichnet, dass**
der Entfernungsmesser für eine automatisch gesteuerte Entfernungsmessung, insbesondere mit variierbaren Zeitintervallen, ausgebildet ist.

12. Vermessungsverfahren für ein handhaltbares Vermessungsgerät (1a,1b) nach einem der Ansprüche 1 bis 11,
mit den Schritten
- Entfernungsmessung wenigstens zweier Entfernungen,
- Ableiten einer zu messenden Grösse, insbesondere einer Distanz, aus den wenigstens zwei gemessenen Entfernungen,
**dadurch gekennzeichnet, dass**
bei der Entfernungsmessung jede Entfernung mit der zum Zeitpunkt der Messung aktuellen
- Position des Vermessungsgerätes (1a,1b) und
- Ausrichtung des Entfernungsmessers automatisch verknüpft erfasst wird.

13. Vermessungsverfahren nach Anspruch 12,
**dadurch gekennzeichnet, dass**
die Messgrössen Position und/oder Ausrichtung durch Registrierung einer Veränderung dieser Messgrössen ermittelt wird.

14. Vermessungsverfahren nach Anspruch 12 oder 13,
**dadurch gekennzeichnet, dass**
die Messgrössen Position und/oder Ausrichtung durch Messung einer absoluten Messgrösse ermittelt wird.

15. Vermessungsverfahren nach einem der Ansprüche 12 bis 14,
**dadurch gekennzeichnet, dass**
die Position und/oder Ausrichtung des Vermessungsgerätes (1b) durch Rückbezug auf wenigstens einen in seiner Position bekannten Punkt erfolgt, insbesondere durch das Verfahren des Rückwärtsschnittes.

16. Vermessungsverfahren nach einem der Ansprüche 12 bis 15,
**dadurch gekennzeichnet, dass**
beim Ableiten einer zu messenden Grösse eine Distanz als Weite (W) zwischen wenigstens zwei Aufpunkten der Entfernungsmessungen bestimmt wird

17. Vermessungsverfahren nach einem der Ansprüche 12 bis 16,
**dadurch gekennzeichnet, dass**
beim Ableiten einer zu messenden Grösse diese aus einer Mehrzahl von Entfernungsmessungen bestimmt wird, wobei die Entfernungsmessungen mit geometrischen Standardobjekten, welche der zu messenden Grösse zugeordnet sind, korreliert werden.

18. Vermessungsverfahren nach Anspruch 17,
**dadurch gekennzeichnet, dass**
die geometrischen Standardobjekten manuell oder automatisch vorgegeben werden, insbesondere aus einer vorgegebenen Auswahl ausgewählt werden.

19. Vermessungsverfahren nach einem der Ansprüche 12 bis 18,
**dadurch gekennzeichnet, dass**
die Position und/oder die Ausrichtung unter Nutzung von wenigstens zwei Stufen unterschiedlicher zeitlicher und/oder räumlicher Auflösung ermittelt wird.

20. Verwendung eines Vermessungsgerätes (1a,1b) nach einem der Ansprüche 1 bis 11 zum Erfassen, Verifizieren und/oder Messen von
- Winkeln zwischen Ebenen,
- Abständen zwischen Kanten oder Begrenzungsflächen von räumlichen Objekten (12),
- Eigenschaften von räumlichen Objekten (12),
- Parallelitäten von Flächen,
- Planaritäten von Flächen.

21. Verwendung eines Vermessungsverfahrens nach einem der Ansprüche 12 bis 19 zum Erfassen, Verifizieren und/oder Messen von
- Winkeln zwischen Ebenen,
- Abständen zwischen Kanten oder Begrenzungsflächen von räumlichen Objekten (12),
- Eigenschaften von räumlichen Objekten (12),
- Parallelitäten von Flächen,
- Planaritäten von Flächen.
